# EUROPEAN PATENT SPECIFICATION

(11) **EP 3 677 392 B1**
(45) Date of publication and mention of the grant of the patent: **23.11.2022**
(21) Application number: 19213892.3
(22) Date of filing: 05.12.2019
(51) Int. Cl.: B25J 11/00, G05B 19/00, G09B 7/02, G05B 19/042

(54) **ROBOT AND METHOD OF CONTROLLING THE SAME**
ROBOTER UND VERFAHREN ZUR STEUERUNG DAVON
ROBOT ET SON PROCÉDÉ DE COMMANDE

(30) Priority: 24.12.2018 KR 20180168554
(43) Date of publication of application: 08.07.2020
(73) Proprietor: LG Electronics Inc., SEOUL, 07336 (KR)
(72) Inventor: CHOI, Seheon, 08592 Seoul (KR); LEE, Seungwon, 08592 Seoul (KR)
(74) Representative: Vossius & Partner Patentanwälte Rechtsanwälte mbB

(56) References cited:
- JP-A- 2016 012 341
- KR-B1- 100 814 330
- US-A1- 2004 215 463
- US-A1- 2005 246 063
- US-A1- 2017 046 965
- US-A1- 2018 165 570
- US-A1- 2018 165 980

## Description

### FIELD

The present disclosure relates to a robot, and more particularly, to a robot capable of interacting with a plurality of users and a method of controlling the robot.

### BACKGROUND

A robot generally relates to a machine that automatically processes or operates a given task by its own ability, and the application fields of the robot may be variously classified into an industrial field, a medical field, an aerospace field, and a submarine field. Recently, there is a trend that communication robots capable of communicating or interacting with humans through voices or gestures are increasing.

Such communication robots may include various types of robots such as a guide robot located at a specific place to provide a variety of information to a user, or a home robot provided in a home. In addition, the communication robots may include an educational robot that guides or assists learning of a learner through interaction with the learner.

Meanwhile, an educational robot of the related art is generally used for one-to-one education with the learner, but an application place of such an educational robot may be limited to a home. In other words, in order for the educational robot to be spread to educational institutions such as daycare centers, kindergartens, private educational institutes, or schools, it is necessary to allow the educational robot to implement one-to-many education.

US 2017/046965 A1 relates to robots in educational applications, and more particularly, to robots with awareness of users and the environment, for use in educational or training applications.

US 2018/165980 A1 relates to a technique for improving learning effectiveness of a learner (user) using a robot.

US 2004/215463 A1 relates to a learning system, a learning method, and a robot apparatus, and is applicable to an entertainment robot, for example.

JP 2016-012341 A relates to a behavior control system, system and program.

US 2005/246063 A1 relates to a robot for participating in a joint performance with a human partner and a method of controlling a robot.

KR 10-0814330 B1 relates to a robotic robot that supports information and communication technology (ICT) education introduced to increase the educational efficiency of students.

US 2018/165570 A1 relates to an emotion control system, a system, and a program.

### SUMMARY

A robot according to the invention is defined in independent claim 1, and a method according to the invention is defined in independent claim 12. Preferred embodiments are defined in the dependent claims.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating a robot according to one embodiment and devices related to the robot.
Fig. 2 is a block diagram illustrating one example of a control configuration of the robot shown in Fig. 1.
Fig. 3 is a flowchart for one embodiment of a control operation of the robot shown in Fig. 1.
Fig. 4 is a block diagram illustrating an example of components included in a controller in connection with the control operation of the robot shown in Fig. 3.
Figs. 5 and 6 are views illustrating examples related to the control operation of the robot shown in Fig. 3.
Fig. 7 is a flowchart for another embodiment of the control operation of the robot shown in Fig. 1.
Fig. 8 is a block diagram illustrating an example of components included in the controller in connection with the control operation of the robot shown in Fig. 7.
Figs. 9 and 10 are views illustrating examples related to the control operation of the robot shown in Fig. 7.
Fig. 11 is a flowchart illustrating still another embodiment of the control operation of the robot shown in Fig. 1.
Figs. 12 and 13 are views illustrating examples related to the control operation of the robot shown in Fig. 1.

### DETAILED DESCRIPTION OF EMBODIMENTS

Hereinafter, embodiments disclosed herein will be described in detail with reference to the accompanying drawings. The accompanying drawings are provided so that the embodiments disclosed herein may be readily understood, and the technical idea disclosed herein is not limited by the accompanying drawings. Thus, it is to be understood that the present disclosure encompasses all changes, equivalents, and substitutes falling within the technical scope of the present disclosure as defined by the appended claims.

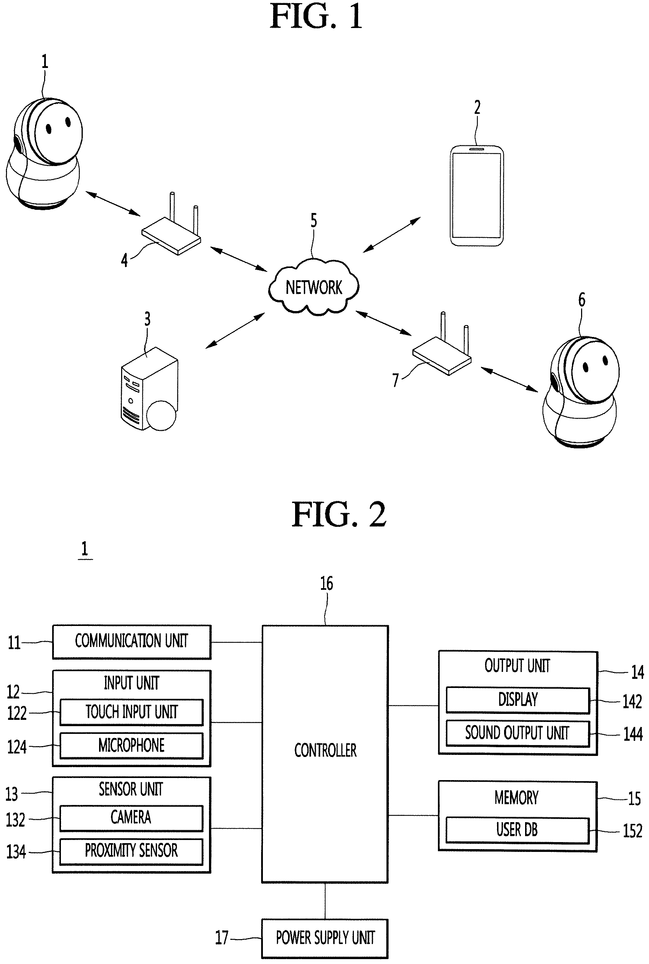

Fig. 1 is a view illustrating a robot according to one embodiment and devices related to the robot.

Referring to Fig. 1, a robot 1 is shown as a communication robot that performs an operation such as providing information to a user or inducing a specific action through communication or interaction with the user.

In particular, the robot 1 may be an educational robot that provides contents for learning of a learner or interacts with the learner to assist learning of the learner. For example, the robot 1 may provide contents such as learning contents in the form of graphics through a display or in the form of voice through a sound output unit such as a speaker. In addition, the robot 1 may interact with the learner through the display or sound output unit.

The robot 1 may be connected to a network 5 through an access point AP such as a router 4. Accordingly, the robot 1 may provide information (learning information, life log data, etc.) obtained for the user to a mobile terminal 2 or a server 3 through the network 5. In some embodiments, the robot 1 may obtain the information about the users from the server 3, and may obtain the contents from the server 3. In this case, the server 3 may store a plurality of contents, or may store and manage information on a plurality of users (identification information for user recognition, unique information of the user, the learning information, the life log data, etc.).

In some embodiments, the robot 1 may share a variety of information with other robots, such as robot 6. The other robot 6 may be connected to the network 5 through the router 7 to exchange information with the robot 1. The robot 6 may be configured in a manner that is the same or similar to that of robot 1, but is not necessarily limited thereto. In particular, the robot 1 may recognize presence of a target person by detecting the target person using a camera or a microphone, and provide a result of the recognition to the other robot 6. When the robots are provided at various places, the robots may track a location of the target person (e.g., a child) to provide related information to another person (e.g., a guardian).

A control configuration of the robot 1 will now be described with reference to Fig. 2.

Fig. 2 is a block diagram illustrating one example of a control configuration of the robot shown in Fig. 1.

Referring to Fig. 2, the robot 1 is shown having a communication unit 11, an input unit 12, a sensor unit 13, an output unit 14, a memory 15, a controller (which may be implemented using one or more processors) 16, and a power supply unit 17. The components shown in Fig. 2 are one example for convenience of explanation, and the robot 1 may include more or fewer components than shown in Fig. 2.

The communication unit 11 may include communication modules configured to connect the robot 1 to the mobile terminal 2, the server 3, or the like through the network 5, or to connect the robot 1 with the other robot 6. For example, the communication unit 11 may include a short range communication module such as Bluetooth, near field communication (NFC), a wireless Internet module such as Wi-Fi, and a mobile communication module such as that capable of communicating using a protocol such as long term evolution (LTE).

The input unit 12 may include at least one input device configured to input a predetermined or other signal or data to the robot 1 by an operation or other actions of the user. For example, the at least one input device may include a physical input device such as a button or a dial, a touch input unit 122 such as a touch pad or a touch panel, a microphone 124 that receives a voice of a user or other sound, and the like. The user may input a request or a command to the robot 1 by operating the input unit 12.

In some embodiments, such as when there are a plurality of users, the controller 16 of the robot 1 may recognize a specific user based on a voice of the specific user received through the microphone 124.

The sensor unit 13 may include at least one sensor configured to sense a variety of information around or otherwise proximate to the robot 1. For example, the sensor unit 13 may include various sensors such as a camera 132 and a proximity sensor 134.

The camera 132 may obtain an image of a scene or object. In some embodiments, the controller 16 may obtain an image including a face of the user through the camera 132 to recognize the user. Alternatively, the controller 16 may obtain a gesture or a facial expression of the user through the camera 132. In this case, the camera 132 may function as the input unit 12.

The proximity sensor 134 may detect that an object such as the user approaches a periphery of the robot 1. For example, when the approach of the user is detected by the proximity sensor 134, the controller 16 outputs an initial screen or an initial voice through the output unit 14 to induce the user to use the robot 1.

The output unit 14 may output a variety of information related to an operation or a state of the robot 1, and various services, programs, applications, and the like that are executed in the robot 1. In addition, the output unit 14 may output various messages or information for allowing the robot 1 to interact with the user.

For example, the output unit 14 may include a display 142 and a sound output unit 144.

The display unit 142 may output the above-described various information or messages in the form of graphics. In some embodiments, the display unit 142 may be implemented in the form of a touch screen including a touch pad. In this case, the display unit 142 may function as an input device as well as an output device.

The sound output unit 144 may output the various information or messages in the form of voice or sound. For example, the sound output unit 144 may include a speaker.

The memory 15 may store various data such as control data for controlling operations of components included in the robot 1 and data for performing an operation corresponding to an input obtained through the input unit 12.

In addition, the memory 15 may store program data of a software module executed by one of at least one processor or controller included in the controller 16.

In addition, the memory 15 may store contents or other data to be provided to users. For example, the data may be received from the server 3 connected to the robot 1 so as to be stored in the memory 15.

The memory 15 may include various hardware storage devices such as a ROM, a RAM, an EPROM, a flash drive, a hard drive, and the like.

In addition, the memory 15 may include a user DB 152. The user DB 152 may include user information for each of a plurality of users. The user information may include user identification information, unique information, learning information, life log data, and the like of the user. In some embodiments, the user DB 152 may be at least a part of a user DB which is stored in the server 3 and transmitted to the robot 1.

The identification information may include data for identifying the user separately from other users, such as data for identifying a face of the user and data for identifying a voice of the user.

The unique information may include information which is unique for each user, such as a name of the user.

The learning information may include a variety of information related to the learning of the user, such as the learning level, learning records (number of times, time, date, etc.), a question-and-answer history, or number of interactions of the user.

The learning level may represent a learning difficulty or a learning progress of the learner for a corresponding learning item. In some embodiments, the learning information may include a learning level of each of learning items of the learner. For example, each of the learning items represents any one learning category, and the learning items may include various items such as 'speaking', 'reading', 'listening', 'Korean', and 'English'.

The robot 1 may update the learning level and the learning information by accumulating the learning records or the question-and-answer history. Alternatively, the robot 1 may transmit the learning records or the question-and-answer history to the server 3. In this case, the learning level and the learning information may be updated in the server 3.

In addition, the robot 1 may output the learning information through the output unit 14 or transmit the learning information to the mobile terminal 2 of the user or another person (e.g., a guardian, etc.) related to the user. Accordingly, the user or another person may check the learning information of the user.

The life log data may include a record or information of an overall daily life of the user. Accordingly, the robot 1 may obtain voice data uttered by the user or image data including the user by using the microphone 124 and/or the camera 132, and may obtain the life log data about the user based on the obtained voice data and/or the obtained image data.

The controller 16 may include at least one processor or controller configured to control the operation of the robot 1. In detail, the controller 16 may include at least one CPU, an application processor (AP), a microcomputer (or a micom), an integrated circuit, an application-specific integrated circuit (ASIC), and the like.

The controller 16 may perform operations according to various embodiments of the robot 1 to be described below with reference to the various figures presented herein. As such, the at least one processor or controller included in the controller 16 may perform such operations by processing the program data of the software module stored in the memory 15.

Meanwhile, the power supply unit 17 of the robot 1 may supply power required for the operations of the components included in the robot 1. For example, the power supply unit 17 may include a power connection unit to which an external wired power cable is connected, and a battery configured to store power to supply the power to the above components. In some embodiments, the power supply unit 17 may further include a wireless charging module configured to wirelessly receive the power to charge the battery.

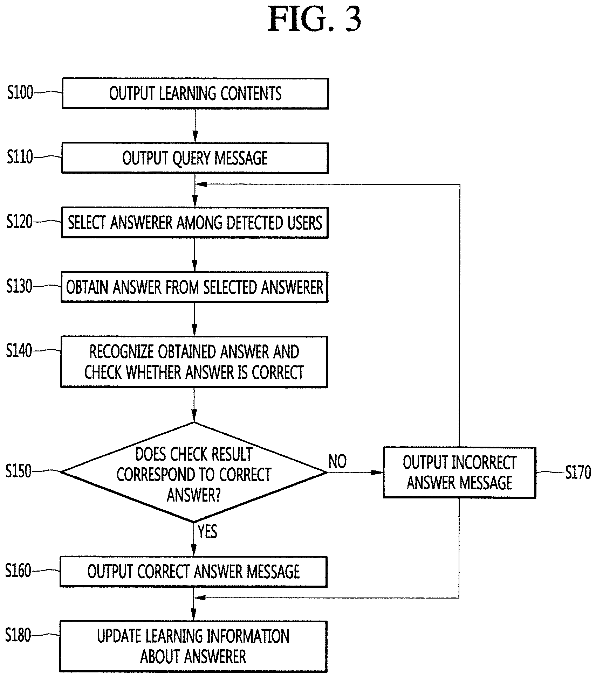

Hereinafter, various embodiments related to the operation of the robot 1 will be described with reference to Figs. 3 to 13.

In the following drawings, an example case will be described in which the content output by the robot 1 is a learning content. However, the content output related to the embodiments of the present invention is not limited to such learning content, and as such, the robot 1 may output various types of content. In this case, an answerer may correspond to an interaction target person, an answer may correspond to interaction data, and the number of answers may correspond to the number of interactions.

Fig. 3 is a flowchart for one embodiment of a control operation of the robot shown in Fig. 1. In Fig. 3, the robot 1 may output learning contents to a plurality of users (S100).

In this example, the user is the learner. For instance, the robot 1 may be provided to a kindergarten school to output learning contents to kindergarten students.

The controller 16 may obtain learning contents stored in the memory 15 or learning contents stored in an external device, the terminal 2, the server 3, or the like connected to the robot 1, and may output the obtained learning contents through the output unit 14.

The robot 1 may output a query message related to the learning contents during or after outputting the learning contents (S110).

For example, at least one message (e.g., query message) related to the learning contents and correct answer data corresponding thereto may be stored in the memory 15 or the external device such as the server 3 connected to the robot 1. The controller 16 may obtain the at least one query message and output the obtained at least one query message through the output unit 14.

In some embodiments, the controller 16 may generate the at least one query message from metadata of the learning contents. The metadata is information related to the learning contents, and may include information representing content, keywords, situations, people, emotions, themes, and other characteristics of the learning contents. The controller 16 may generate the query message and the correct answer data from the information included in the metadata.

The robot 1 may select an answerer for the query message among the detected users (S120).

The controller 16 may detect a plurality of users around the robot 1 by using the camera 132 and/or the microphone 124. In detail, the controller 16 may detect the users from identification information of the users stored in the user DB 152 and the image and voice data obtained through the camera 132 and/or the microphone 124. An operation of detecting the user may be performed at any time before, during, or after outputting the learning contents.

The controller 16 may select the answerer for the query message among the users.

For example, the controller 16 may detect at least one user having an intention to answer (an intention to interact) among the users using the camera 132. The controller 16 may select, as the answerer, a user detected as a first person who expresses an intention to answer among the detected at least one user.

In some embodiments, the controller 16 may select the answerer based on the learning information of each of the users. For example, the controller 16 may select a user with the lowest learning level among the users as the answerer. Alternatively, the controller 16 may select a user with the smallest number of answers or a user whose latest answering date is oldest as the answerer based on the question-and-answer history of each of the users.

Alternatively, the controller 16 may arbitrarily select the answerer among the users. For example, when the users or the user having an intention to answer are not accurately recognized due to a quality problem of the image data obtained by the camera 132 or the like, the controller 16 may arbitrarily select the answerer.

In some embodiments, at least one of an operation of detecting the users or an operation of selecting the answerer may be performed by the server 3 connected to the robot 1.

As such, in this aspect, the controller 16 may transmit the image data and/or the voice data obtained through the camera 132 and/or the microphone 124 to the server 3. The server 3 may detect the users based on any or all of the received data and may recognize the user having the intention to answer among the detected users. The server 3 may select the recognized user as the answerer and transmit information about the selected answerer (e.g., unique information (name, etc.)) to the robot 1.

The controller 16 may output an answer request message including the unique information (e.g., a name) of the selected answerer through the sound output unit 144 or the like. For example, the controller 16 may convert the unique information (name) of the answerer included in the user DB 152 into voice data and output the converted voice data through the sound output unit 144.

The robot 1 may obtain an answer from the selected answerer (S130).

The controller 16 may output the answer request message including the unique information of the selected answerer, and then obtain an answer to the query message through the microphone 124 or the input unit 12.

For example, the controller 16 may identify a voice of the answerer from a variety of voice and sound data obtained through the microphone 124 based on the identification information of the answerer (voice information) stored in the user DB 152.

In some embodiments, the voice of the answerer may not be easily recognized from the voice and sound data due to an utterance or a noise generated from other users. In other words, when other voices or sounds except for the voice of the answerer are detected by a reference value or more among the obtained voice and sound data, the controller 16 may output a message for inducing the answerer to answer or a message for inducing restriction of the utterance or noise generated from other users except for the answerer.

In some embodiments, the controller 16 may transmit the obtained voice and sound data to the server 3. The server 3 may identify the voice of the answerer based on the received voice and sound data.

The robot 1 may recognize the obtained answer and check whether the answer is correct based on a result of the recognition (S140).

The controller 16 may recognize the answer included in the identified voice by using various generally-known voice recognition algorithms, and compare the recognized answer with correct answer data.

For example, the correct answer data corresponding to the query message may be stored in the memory 15 or the external device such as the server 3 connected to the robot 1. In some embodiments, when the controller 16 has generated the query message based on the metadata, the controller 16 may also generate the correct answer data corresponding to the query message based on the metadata.

The controller 16 may determine whether the answer of the answerer is correct by checking whether a keyword included in the recognized answer is included in at least one keyword included in the correct answer data.

In some embodiments, when the server 3 has identified the voice of the answerer, the server 3 may check whether the answer is correct by recognizing the answer included in the identified voice and comparing the recognized answer with the correct answer data.

If a check result corresponds to a correct answer (YES in S150), the robot 1 may output the correct answer message (S160).

In some embodiments, when the checking operation is performed by the server 3, the server 3 may transmit the correct answer message to the robot 1. In this case, the controller 16 may output the received correct answer message.

However, if the check result corresponds to an incorrect answer (NO in S150), the robot 1 may output an incorrect answer message (S170), and may perform the operation S120 again.

If the check result is the incorrect answer, the controller 16 may select another user except the answerer from the users to obtain the answer.

Alternatively, the controller 16 may request the answerer to answer again if the check result is the incorrect answer.

In some embodiments, when the checking operation is performed by the server 3, the server 3 may transmit the incorrect answer message and/or the unique information about the other user. The controller 16 may output the received incorrect answer message, and may output the unique information about the other user to obtain the answer from the other user.

In some cases, the robot 1 may update the learning information about the answerer based on the check result of the answer (S180).

For instance, the controller 16 may update the learning level among the learning information about the answerer, which is included in the user DB 152, based on the check result of the answer. For example, the controller 16 may update the learning information by increasing the learning level when the check result of the answer corresponds to the correct answer, or by decreasing the learning level when the check result of the answer corresponds to the incorrect answer.

In addition, the controller 16 may record an answer date of the answerer, the check result of the answer, and the like in the question-and-answer history of the learning information of the answerer.

In some embodiments, the controller 160 may transmit the check result of the answer and the question-and-answer history to the server 3. In this case, the learning information about the answerer may be updated by the server 3.

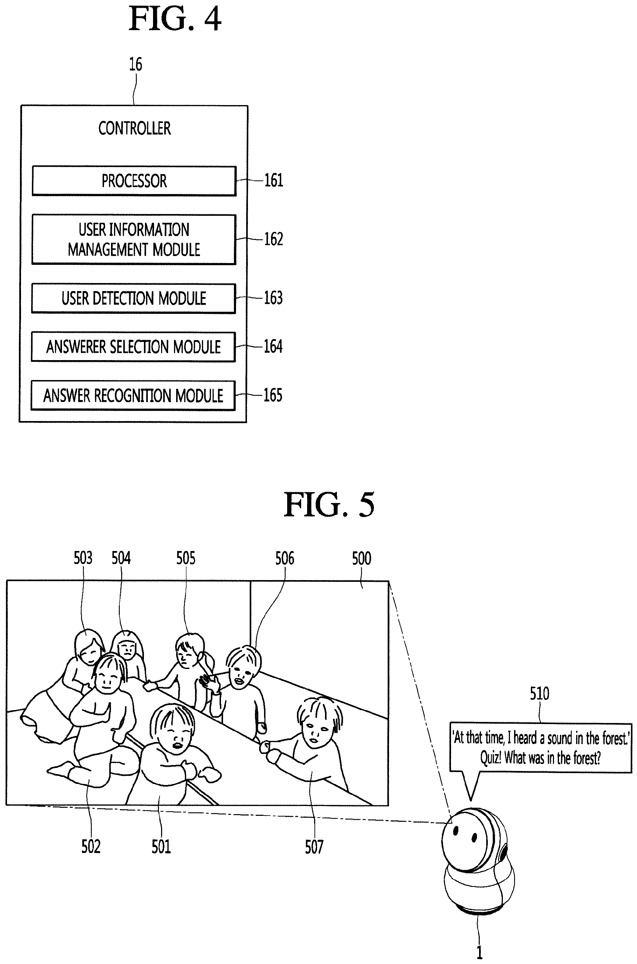

Fig. 4 is a block diagram illustrating an example of components included in a controller in connection with the control operation of the robot shown in Fig. 3.

Referring to Fig. 4, the controller 16 may include a processor 161, a user information management module 162, a user detection module 163, an answerer selection module 164, and an answer recognition module 165.

In this case, the user information management module 162, the user detection module 163, the answerer selection module 164, and the answer recognition module 165 may be implemented as software modules. The processor 161 or another controller included in the controller 16 may execute the modules 162 to 165 to control operations of the modules 162 to 165. In other words, an operation performed by each of the modules 162 to 165 may be controlled by the processor 161 or another controller included in the controller 16.

The processor 161 may control overall operations of the components included in the robot 1.

In particular, the processor 161 (or another controller included in the controller 16) may load program data of any one of the user information management module 162, the user detection module 163, the answerer selection module 164, and the answer recognition module 165 stored in the memory 15 to execute the module corresponding to the loaded program data.

The user information management module 162 may manage (create, load, update, delete, etc.) the user information of each of the users stored in the user DB 152.

The user information management module 162 may load the user information of each of the users from the memory 15. As described above, the user information may include user identification information, unique information, learning information, life log data, and the like of the user. The loaded user information may be provided to the processor 161 and other modules 163 to 165.

In addition, when data in the user information is changed according to a processing result of the processor 161 and other modules 163 to 165, the user information management module 162 may update the user information by using the changed data. The user information management module 162 may store the updated user information in the memory 15. The user detection module 163 may detect at least one user included in the image data obtained through the camera 132 and/or the voice data obtained through the microphone 124 by using the identification information of each of the users stored in the user DB 152.

For example, the user detection module 163 may recognize a face of each of at least one user from the obtained image data by using a generally-known face recognition algorithm, and may detect a user corresponding to each of the recognized faces by using the recognized face and the identification information. As such, the identification information may include characteristic data representing facial characteristics of each of the users.

Alternatively, the user detection module 163 may recognize voice characteristics (e.g., frequency) of each of the at least one user through frequency analysis of the obtained voice data or the like, and may detect or otherwise identify a user corresponding to each of the recognized voice characteristics by using the recognized voice characteristic and the identification information.

The answerer selection module 164 may select the answerer for the query message among the detected users.

As described above, the answerer selection module 164 may detect at least one user having an intention to answer among the users by using the camera 132. The answerer selection module 164 may select, as the answerer, a user detected as a first person who expresses the intention to answer among the detected at least one user.

In some embodiments, the answerer selection module 164 may select the answerer based on the learning information of each of the users. For example, the answerer selection module 164 may select a user with the lowest learning level among the users as the answerer. Alternatively, the answerer selection module 164 may select a user with the smallest number of answers or a user whose latest answering date is oldest as the answerer based on the question-and-answer history of each of the users.

Alternatively, the answerer selection module 164 may arbitrarily select the answerer among the users. For example, when the users or the user having the intention to answer are not accurately recognized due to a quality problem of the image data obtained by the camera 132 or the like, the answerer selection module 164 may arbitrarily select the answerer.

The answer recognition module 165 may receive the voice and sound data through the microphone 124 after outputting the query message. The answer recognition module 165 may extract the voice of the answerer through the frequency analysis of the received voice and sound data or the like.

The answer recognition module 165 may recognize the extracted voice of the answerer by using a generally-known voice recognition algorithm. The answer recognition module 165 may convert the recognized voice into a text.

In some embodiments, the answer recognition module 165 may receive the image data including the answerer through the camera 132 after outputting the query message. The answer recognition module 165 may recognize the answer by extracting a gesture of the answerer based on the received image data and recognizing the extracted gesture.

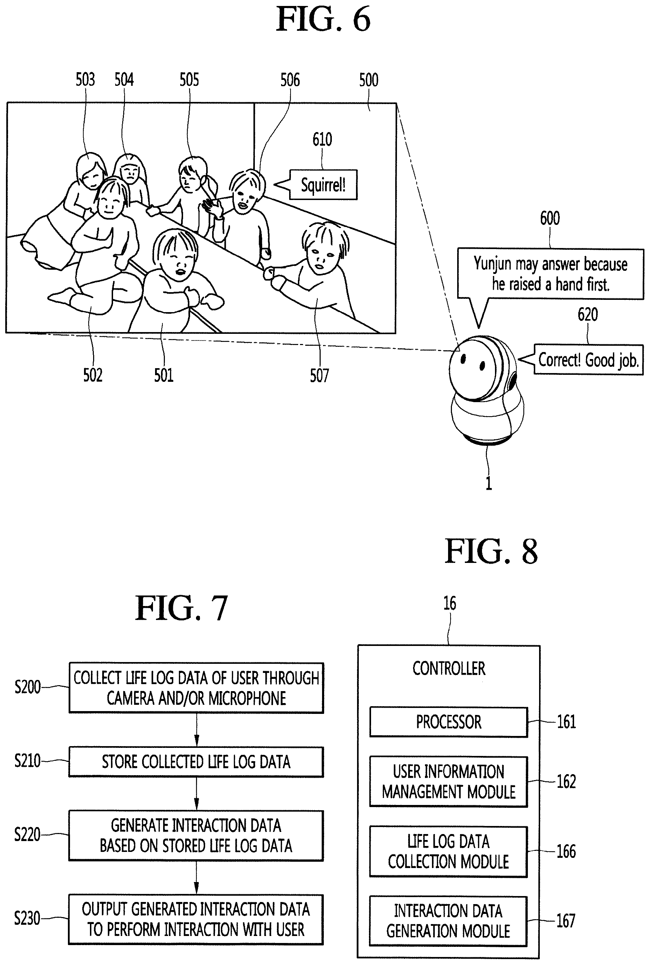

One example related to the operation of the robot shown in Fig. 3 will now be described with reference to Figs. 5 and 6, which are views illustrating examples related to the control operation of the robot shown in Fig. 3.

In Figs. 5 and 6, consider the example that the robot 1 is located in a kindergarten class and the users are kindergarten students.

Referring to Fig. 5, the robot 1 may provide the learning contents and a query message 510 to a plurality of users 501 to 507 through the sound output unit 144.

In Fig. 5, the controller 16 is shown outputting the query message that relates to learning contents. However, in some embodiments, the query message may be output after the learning contents are provided.

The controller 16 may also obtain at least one image data through the camera 132 before, during, or after outputting the learning contents, and may recognize the users 501 to 507 based on the obtained image data.

Referring to Fig. 6, the controller 16 may select an answerer 506 among the users 501 to 507 after outputting the query message 510.

As described above, the controller 16 may detect a user 506 having an intention to answer among the users 501 to 507 from the image data obtained through the camera 132. For example, the controller 16 may recognize that the user 506 raises a hand among the users 501 to 507 from the obtained image data, and may detect that the user 506 has the intention to answer according to a result of the recognition. In this case, the controller 16 may select the user 506 as the answerer 506.

The controller 16 may output an answer request message 600 including a name of the detected user 506 through the sound output unit 144. The user 506 may utter an answer 610 in response to the output answer request message 600.

The controller 16 may receive the answer 610 through the microphone 124 and recognize the received answer 610. The controller 16 may determine whether the answer 610 of the user 506 is correct based on the recognized answer and the correct answer data.

For example, when the answer 610 of the user 506 is correct, the controller 16 may output a correct answer message 620 through the sound output unit 144.

In addition, the controller 16 may update the learning information of the user 506 (such as the learning level and/or the question-and-answer history) based on the answer 610. In some embodiments, the controller 16 may transmit the answer 610 to the server 3. The server 3 may update the learning information of the user 506 based on the received answer 610.

Although not shown, the robot 1 may generate a learning report including a learning state, a learning record, a learning level, and the like based on the learning information of each of the users stored in the user DB 152, and may output the generated learning report through the output unit 14 or transmit the generated learning report to the mobile terminal 2 or the server 3 through the communication unit 11.

According to the embodiment shown in Figs. 3 to 6, the robot 1 may support the learning or education for the users by managing the learning information of the users through the recognition and the question-and-answer of the users. In other words, since the robot 1 may support one-to-many learning, the application of the robot 1 can be extensively increased from a home to a kindergarten, a private educational institute, or the like.

In addition, in a case such as a school where a large number of students are managed by one teacher, the teacher may have difficulty in managing the students. However, the learning information of the students such as the learning level or the learning state can be managed more effectively by utilizing the robot 1 according to an embodiment.

Fig. 7 is a flowchart for another embodiment of the control operation of the robot shown in Fig. 1.

Referring to Fig. 7, the robot 1 may collect the life log data of the user through the camera and/or the microphone (S200), and may store the collected life log data (S210).

The life log data may include a record or information of an overall daily life of the user.

In other words, the robot 1 may obtain the voice data uttered by the user or the image data including the user by using the microphone 124 and/or the camera 132. The robot 1 may obtain the life log data including an action record or an utterance record of the user based on the obtained voice data and/or the obtained image data.

The robot 1 may generate interaction data for interacting with the user based on the stored life log data (S220).

The robot 1 according to an embodiment may continuously or regularly update the user information through interaction with the user to obtain more accurate and detailed learning information or life log data about the user. Examples of learning information have been described above with reference to Fig. 2 and other figures.

The controller 16 may generate the interaction data based on the life log data in order to interact with the user. For example, the interaction data may include a query message or an emotional message related to the action record or the utterance record of the user. In some embodiments, the controller 16 may generate the interaction data based on the life log data and the learning information.

In some embodiments, the controller 16 may transmit the life log data to the server 3. The server 3 may generate the interaction data based on the received life log data. The controller 16 may receive the interaction data from the server 3.

The robot 1 may output the generated interaction data to interact with the user (S230).

The controller 16 may output the generated interaction data through the display unit 142 and/or the sound output unit 144.

The controller 16 may obtain a response of the user to the output interaction data through the camera 132 and/or the microphone 124. The controller 16 may recognize the meaning of the response by recognizing the obtained response.

In some embodiments, the controller 16 may generate the interaction data based on the obtained response, and may repeatedly perform the interaction with the user.

Although not shown, the robot 1 may update the user information included in the user DB 152 based on the response of the user obtained through the interaction with the user.

The controller 16 may update the learning information and/or the life log data of the user information based on a recognition result for the response of the user. Accordingly, since the robot 1 may obtain and update user information more accurately, the robot 1 may have more greater management capability for the user information.

In some embodiments, the controller 16 may transmit the response of the user to the server 3. In this case, the server 3 may recognize the response and update the user information based on a result of the recognition.

Fig. 8 is a block diagram illustrating an example of components included in the controller in connection with the control operation of the robot shown in Fig. 7.

In Fig. 8, the controller 16 may include the processor 161, the user information management module 162, a life log data collection module 166, and an interaction data generation module 167.

Since the processor 161 and the user information management module 162 have been described above with reference to Fig. 4, the descriptions thereof will be omitted.

The life log data collection module 166 may obtain the life log data of the user from the image data and the voice data obtained from the camera 132 and/or the microphone 124.

For example, similar to the user detection module 163 (see Fig. 4), the life log data collection module 166 may recognize the user from the image data. The life log data collection module 166 may recognize an action, a gesture, a facial expression, and/or a carried object of the user from the image data by using various generally-known image recognition algorithms, and may obtain the life log data based on a result of the recognition.

In addition, similar to the user detection module 163, the life log data collection module 166 may recognize the user from the voice data and extract the voice of the recognized user. The life log data collection module 166 may recognize the extracted voice of the user using a voice recognition algorithm and obtain the life log data based on a result the recognition.

The interaction data generation module 167 may generate the interaction data for interacting with the user from the life log data. The interaction data may include a message for inducing the response of the user, such as a query message related to the obtained life log data.

In some embodiments, the interaction data generation module 167 may generate the interaction data based on the life log data and the learning information of the user.

The processor 161 may interact with the user by outputting the interaction data generated by the interaction data generation module 167 through the output unit 14.

Based on the interaction with the user, the processor 161 may obtain the response such as a voice, a touch input, a gesture, or a facial expression of the user through the input unit 12, and recognize the obtained response. The processor 161 may update the life log data and/or the learning information based on the recognized response. Alternatively, the processor 161 may transmit the obtained response to the server 3.

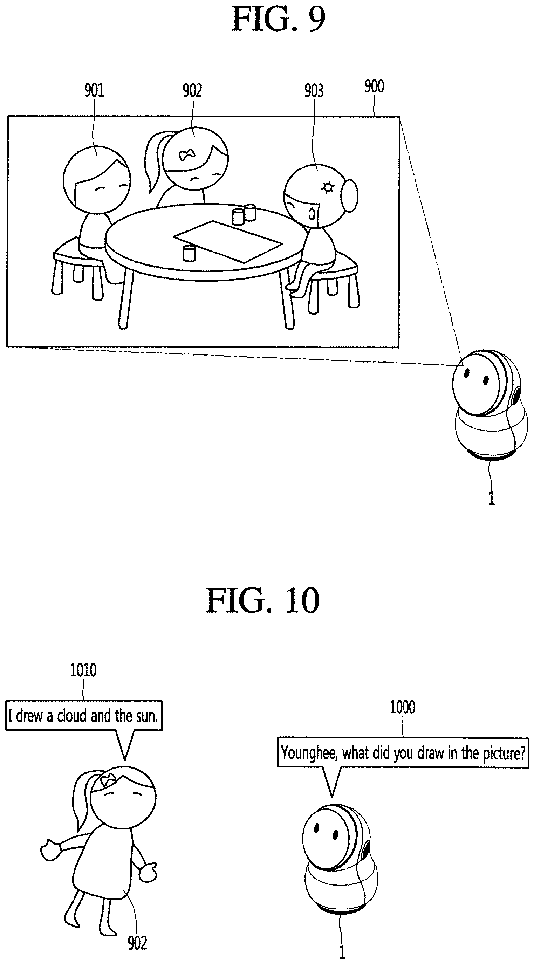

Figs. 9 and 10 are views illustrating examples related to the control operation of the robot shown in Fig. 7.

Referring to FIG. 9, the robot 1 may be located within the kindergarten to recognize users 901 to 903 (kindergarten students) from image data 900 obtained through the camera 132.

The controller 16 may recognize an action, a gesture, a facial expression, a carried object, and the like of each of the users 901 to 903 from the image data 900, and may obtain the life log data of each of the users 901 to 903 based on a result of the recognition. For example, the controller 16 may recognize a picture drawing action of a second user 902 from the image data 900 and acquire the life log data representing that the second user 902 has drawn a picture based on a result of the recognition.

Referring to Fig. 10, the controller 16 may output an interaction message 1000 based on the obtained life log data through the sound output unit 144. For example, the controller 16 may generate the interaction message 1000 such as "Younghee, what did you draw in the picture?" based on information about a name ('Younghee') of the second user 902 obtained from the user DB 152 and the life log data ('picture').

The controller 16 may obtain a response 1010 to the output interaction message 1000 from the second user 902. As the controller 16 recognizes the obtained response 1010, the controller 16 may recognize that the second user 902 has drawn 'cloud' and 'sun'. Based on a result of the recognition, the controller 16 may update the life log data obtained in Fig. 9 as 'drawn cloud and sun'.

In other words, the robot 1 may continuously obtain the life log data of the user by using the camera 132, the microphone 124, and the like, and may continuously or regularly update the life log data and the learning information through the interaction based on the obtained life log data. Accordingly, the robot 1 may obtain accurate and detailed data on the learning or action of the user to effectively manage the learning of the user.

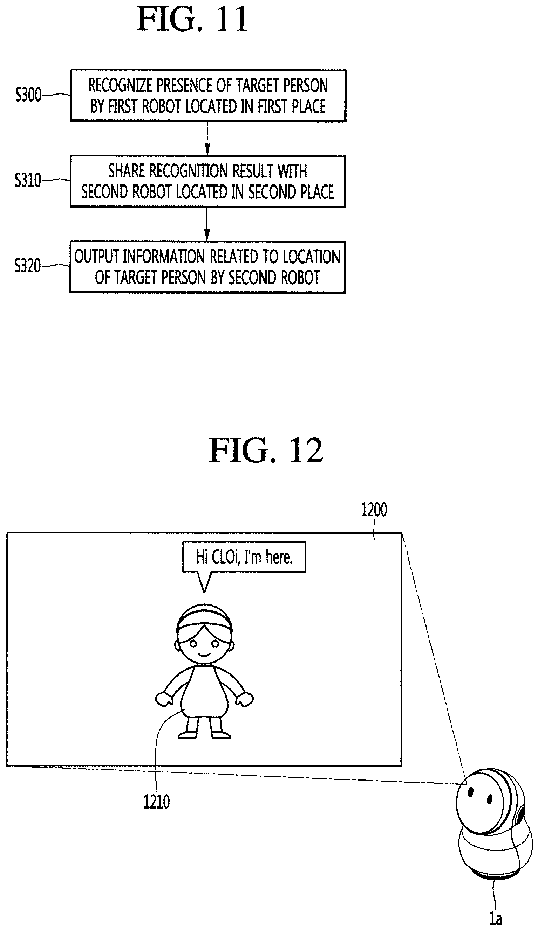

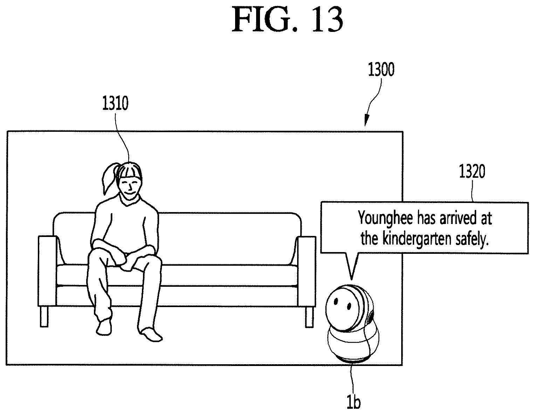

Fig. 11 is a flowchart illustrating still another embodiment of the control operation of the robot shown in Fig. 1. Figs. 12 and 13 are views illustrating examples related to the control operation of the robot shown in Fig. 1.

Referring to Figs. 11 to 13, a first robot 1a located in a first place may recognize presence of a target person (S300).

The controller 16 of the first robot 1a may recognize the presence of the target person using the image data or the voice data obtained through the camera 132, the microphone 124, or the like. Since specific operations of the first robot 1a to recognize the target person have been described above with reference to Figs. 3 and 4.

In this regard, referring to Fig. 12, the first robot 1a may be a robot located in the kindergarten. The controller 16 of the first robot 1a may obtain image data 1200 using the camera 132. As the image data 1200 including a target person 1210 is obtained, the controller 16 may recognize that the target person 1210 is present in the kindergarten.

In some embodiments, the controller 16 may additionally or alternatively obtain voice data of the target person 1210 using the microphone 124 to recognize that the target person 1210 is present in kindergarten.

The first robot 1a may share a result of the recognition with a second robot 1b located in a second place (S310).

For instance, the controller 16 of the first robot 1a may transmit the recognition result for the presence of the target person to the second robot 1b through the communication unit 11. As an example with reference to Fig. 1, the recognition result may be transmitted to the second robot 1b through an access point connected to the first robot 1a, a network, and an access point connected to the second robot 1b.

In some embodiments, the controller 16 of the first robot 1a may transmit the recognition result to the server 3. In this case, the server 3 may transmit the received recognition result to the second robot 1b.

The second robot 1b may output information related to a location of the target person (S320).

The controller 16 of the second robot 1b may output the information related to the location of the target person through the output unit 14 based on the recognition result received from the first robot 1a.

Referring to Fig. 13, the second robot 1b may be a robot located in a home 1300. As the recognition result of the target person 1210 is received from the first robot 1a, the controller 16 of the second robot 1b may recognize that the target person 1210 is present in 'kindergarten' corresponding to the first robot 1a.

Based on the recognition result, the controller 16 of the second robot 1b may output a notification 1320 indicating that the target person 1210 is located in the kindergarten to a user 1310 (e.g., a guardian) present in the home 1300. In other words, the user 1310 may conveniently obtain information about the location of the target person 1210 through the robots 1a and 1b.

Although the location sharing performed by using two robots 1a and 1b has been described with reference to Figs. 11 to 13, a larger number of robots may be used in some embodiments. In this case, each of the robots may be located at various places to effectively track the location of the target person.

According to an embodiment, the robot may support learning or education for a plurality of users by managing learning information of the users through recognition and question-and-answer of the users. In other words, since the robot may support one-to-many learning, the application of the robot can be extensively increased from a home to a kindergarten, a private educational institute, or the like.

In addition, in a case such as a school where a large number of students are managed by one teacher, the teacher may have difficulty in managing the students. However, learning information of the students such as a learning level or a learning state can be managed more effectively by utilizing the robot according to an embodiment.

Moreover, the robot may continuously obtain the life log data of the user by using a camera, a microphone, and the like, and may continuously update the life log data and the learning information through the interaction based on the obtained life log data. Accordingly, the robot may obtain accurate and detailed data on the learning or an action of the user so as to effectively manage the learning of the user.

In addition, the robot may provide information on the location of the target person to the user such as a guardian through sharing information with robots disposed in different places, so that the guardian can conveniently track the location of the target person through the robots.

As described above, the technical idea of the present disclosure has been described for illustrative purposes, and various changes and modifications can be made by those of ordinary skill in the art to which the present disclosure pertains without departing from the essential characteristics of the present disclosure.

Therefore, the embodiments disclosed in the present disclosure are not intended to limit the technical idea of the present disclosure but to describe the technical idea of the present disclosure, and the scope of the technical idea of the present disclosure is not limited by the embodiments.

The scope of the present disclosure should be defined by the appended claims

## Claims

1. A robot (1) comprising:
a communication unit (11) configured to establish connection with a server (3);
an output unit (14) including at least one of a display (142) or a sound output unit (144);
a memory (15) configured to store user information for each user of a plurality of users, wherein the user information includes identification information of a corresponding user;
an input unit (12, 13) including at least one of a camera (132) or a microphone (124); and
a controller (16) configured to:
control the output unit (14) to output a content;
control the output unit (14) to output a message related to the content during or after outputting the content;
recognize the users based on the identification information and at least one of image data obtained through the camera (132) or voice data obtained through the microphone (124);
recognize a user having an intention to interact among the recognized users;
select the recognized user as an interaction target person based on a question-and-answer history of each of the users;
select the interaction target person arbitrarily when the users or the user having the intention to answer are not recognized;
obtain, via the input unit (12, 13), interaction data with regard to the message from the interaction target person, when the interaction target person is selected from the plurality of users based on data obtained through the input unit (12, 13); and
update the user information of the interaction target person based on the obtained interaction data or transmit the obtained interaction data to the server (3).

2. The robot (1) according to claim 1, wherein the user information includes learning information of each of the users, and
wherein the controller (16) is further configured to update the learning information of the interaction target person based on the obtained interaction data.

3. The robot (1) according to claim 1, wherein the controller (16) is configured to recognize a user having an intention to interact among the recognized users to select the recognized user as the interaction target person based on at least one of the image data obtained through the camera (132) or the voice data obtained through the microphone (124) after outputting the message.

4. The robot (1) according to any one of claims 1 to 3, wherein the controller (16) is configured to select a user with a lowest learning level, or selects a user with a smallest number of interactions as the interaction target person based on the learning information included in the user information of each of the recognized users.

5. The robot (1) according to any one of claims 1 to 4, wherein the controller (16) is configured to output an interaction request message, which includes unique information included in the user information of the selected interaction target person, through the output unit (14).

6. The robot (1) according to any one of claims 1 to 5, wherein the controller (16) is configured to:
recognize the obtained interaction data to compare a result of the recognition with correct answer data for the message; and
control the output unit (14) to output a correct answer message when the result of the recognition of the interaction data is correct as a result of the compare.

7. The robot (1) according to any one of claims 1 to 6, wherein the controller (16) is configured to:
receive voice data including the interaction data through the microphone (124); and
output a message for inducing restriction of an utterance or a noise generated from other users except for the interaction target person through the output unit (14) when a voice or a sound other than a voice of the interaction target person is detected from the received voice data by a reference value or more.

8. The robot (1) according to any one of claims 1 to 7, wherein the controller (16) is configured to generate the message based on metadata of the content.

9. The robot (1) according to any one of claims 1 to 8, wherein the controller (16) is configured to receive at least one of the user information or the content from the server (3) .

10. The robot (1) according to claim 1 or 2, wherein the controller (16) is configured to:
transmit data obtained through the input unit (12, 13) to the server (3) after outputting the message;
receive information of the interaction target person selected by the server (3) from the server (3); and
output an interaction request message including the received information of the interaction target person through the output unit (14).

11. The robot (1) according to any one of claims 1 to 5 and 7 to 10, wherein the controller (16) is configured to:
transmit data including the interaction data obtained through the input unit (12, 13) to the server (3); and
receive a message from the server (3) depending on whether the interaction data is correct to output the received message through the output unit (14).

12. A method of controlling a robot (1), the method comprising:
outputting a content through an output unit (14) including at least one of a display (142)or a sound output unit(144);
outputting a message related to the content through the output unit (14) during or after outputting the content;
recognizing a plurality of users by using an input unit (12) including at least one of a camera (132) or a microphone (124);
selecting an interaction target person for the message among the recognized users,
wherein the selecting an interaction target person for the message among the recognized users includes:
recognizing a user having an intention to interact among the recognized users;
selecting the recognized user as the interaction target person based on a question-and-answer history of each of the users;
selecting the interaction target person arbitrarily when the users or the user having the intention to answer are not recognized;
obtaining an interaction data from the selected interaction target person through the input unit (12, 13); and
updating user information of the interaction target person based on the obtained interaction data.

13. The method according to claim 12, wherein the selecting of the interaction target person includes:
recognizing a user having an intention to interaction among the recognized users based on at least one of image data or voice data obtained through the input unit (12, 13) after outputting the message; and
selecting the recognized user as the interaction target person.

14. The method according to claim 13 or 14, wherein the obtaining of the interaction data includes:
receiving voice data including the interaction data through the microphone (124); and
outputting a message for inducing restriction of an utterance or a noise generated from other users except for the interaction target person through the output unit (14) when a voice or a sound other than a voice of the interaction target person is detected from the received voice data by a reference value or more.

## Patentansprüche

1. Roboter (1), der aufweist:
eine Kommunikationseinheit (11), die eingerichtet ist, eine Verbindung mit einem Server (3) zu errichten;
eine Ausgabeeinheit (14), die wenigstens eine von einer Anzeige (142) oder einer Klangausgabeeinheit (144) aufweist;
einen Speicher (15), der eingerichtet ist, Benutzerinformationen für einen jeden Benutzer einer Vielzahl von Benutzern zu speichern, wobei die Benutzerinformationen Identifizierungsinformationen eines zugehörigen Benutzers aufweisen;
eine Eingabeeinheit (12, 13), die wenigstens eines von einer Kamera (132) oder einem Mikrofon (124) aufweist; und
eine Steuereinheit (16), die eingerichtet ist:
die Ausgabeeinheit (14) zu steuern, um einen Inhalt auszugeben;
die Ausgabeeinheit (14) zu steuern, um eine Nachricht bezüglich des Inhalts während oder nach der Ausgabe des Inhalts auszugeben;
die Benutzer basierend auf den Identifikationsinformationen und wenigstens eines von Bilddaten, die über die Kamera (132) erhalten wurden, oder Sprachdaten, die über das Mikrofon (124) erhalten werden, zu erkennen;
einen Benutzer aus den erkannten Benutzern zu erkennen, der eine Absicht zur Interaktion hat;
den erkannten Benutzer als eine Interaktionszielperson basierend auf einer Frage-und-Antwort-Historie eines jeden von den Benutzern auszuwählen;
die Interaktionszielperson beliebig auszuwählen, wenn die Benutzer oder der Benutzer, die die Absicht zum Antworten haben, nicht erkannt werden;
über die Eingabeeinheit (12, 13) Interaktionsdaten bezüglich der Nachricht von der Interaktionszielperson zu erhalten, wenn die Interaktionszielperson ausgewählt ist aus der Vielzahl von Benutzern basierend auf Daten, die über die Eingabeeinheit (12, 13) erhalten werden; und
die Benutzerinformationen der Interaktionszielperson basierend auf den erhaltenen Interaktionsdaten zu aktualisieren oder die erhaltenen Interaktionsdaten an den Server (3) zu übertragen.

2. Roboter (1) nach Anspruch 1, wobei die Benutzerinformationen Lerninformationen von einem jeden der Benutzer aufweisen, und
wobei die Steuereinheit (16) weiterhin eingerichtet ist, die Lerninformationen der Interaktionszielperson basierend auf den erhaltenen Interaktionsdaten zu aktualisieren.

3. Roboter (1) nach Anspruch 1, wobei die Steuereinheit (16) eingerichtet ist, einen Benutzer, der eine Absicht zur Interaktion hat, aus den erkannten Benutzern zu erkennen, um den erkannten Benutzer als die Interaktionszielperson basierend auf wenigstens einem von den Bilddaten, die durch die Kamera (132) erhalten wurden, oder den Sprachdaten, die über das Mikrofon (124) nach Ausgabe der Nachricht erhalten wurden, auszuwählen.

4. Roboter (1) nach einem der Ansprüche 1 bis 3,
wobei die Steuereinheit (16) eingerichtet ist, einen Benutzer mit einer niedrigsten Lernebene oder einen Benutzer mit der kleinsten Anzahl von Interaktionen als die Interaktionszielperson basierend auf Lerninformationen, die in den Benutzerinformationen eines jeden der erkannten Benutzer enthalten sind, auszuwählen.

5. Roboter (1) nach einem der Ansprüche 1 bis 4,
wobei die Steuereinheit (16) eingerichtet ist, eine Interaktionsanforderungsnachricht, die eindeutige Informationen aufweist, die in den Benutzerinformationen der ausgewählten Interaktionszielperson enthalten sind, über die Ausgabeeinheit (14) auszugeben.

6. Roboter (1) nach einem der Ansprüche 1 bis 5, wobei die Steuereinheit (16) eingerichtet ist:
die erhaltenen Interaktionsdaten zu erkennen, um ein Ergebnis der Erkennung mit korrekten Antwortdaten für die Nachricht zu vergleichen; und
die Ausgabeeinheit (14) zu steuern, eine korrekte Antwortnachricht auszugeben, wenn als Ergebnis des Vergleichs das Ergebnis der Erkennung der Interaktionsdaten korrekt ist.

7. Roboter (1) nach einem der Ansprüche 1 bis 6, wobei die Steuereinheit (16) eingerichtet ist:
Sprachdaten, die die Interaktionsdaten aufweisen, über das Mikrofon (124) zu empfangen; und
eine Nachricht über die Ausgabeeinheit (14) auszugeben, um eine Beschränkung einer Äußerung oder eines Geräusches, das von anderen Benutzern erzeugt wurde, außer für die Interaktionszielperson einzuführen, wenn eine Stimme oder ein Klang aus den empfangenen Stimmdaten erfasst wird, die/der sich von der Stimme der Interaktionszielperson durch einen Referenzwert oder mehr unterscheidet.

8. Roboter (1) nach einem der Ansprüche 1 bis 7,
wobei die Steuereinheit (16) eingerichtet ist, die Nachricht basierend auf den Metadaten des Inhalts zu erzeugen.

9. Roboter (1) nach einem der Ansprüche 1 bis 8,
wobei die Steuereinheit (16) eingerichtet ist, wenigstens eines von den Benutzerinformationen oder dem Inhalt vom Server (3) zu empfangen.

10. Roboter (1) nach einem der Ansprüche 1 oder 2, wobei die Steuereinheit (16) eingerichtet ist:
Daten an den Server (3) zu übertragen, die über die Eingabeeinheit (12, 13) erhalten wurden, nachdem die Nachricht ausgegeben wurde, Informationen der Interaktionszielperson, die vom Server (3) ausgewählt wurden, vom Server (3) zu empfangen; und
eine Interaktionsanforderungsnachricht, die die empfangenen Informationen der Interaktionszielperson aufweist, über die Ausgabeeinheit (14) auszugeben.

11. Roboter (1) nach einem der Ansprüche 1 bis 5 und 7 bis 10, wobei die Steuereinheit (16) eingerichtet ist:
Daten, die die Interaktionsdaten aufweisen, die über die Eingabeeinheit (12, 13) erhalten wurden, an den Server (3) zu übertragen;
und
eine Nachricht vom Server (3) in Abhängigkeit davon zu empfangen, ob die Interaktionsdaten korrekt sind, um die empfangene Nachricht über die Ausgabeeinheit (14) auszugeben.

12. Verfahren zum Steuern eines Roboters (1), wobei das Verfahren aufweist:
Ausgeben eines Inhalts über eine Ausgabeeinheit (14), die wenigstens eines von einer Anzeige (142) oder einer Klangausgabeeinheit (144) aufweist;
Ausgegeben einer Nachricht bezüglich des Inhalts über die Ausgabeeinheit (14) während oder nach dem Ausgeben des Inhalts;
Erkennen einer Vielzahl von Benutzern durch Verwenden einer Eingabeeinheit (12), die wenigstens eines von einer Kamera (132) oder einem Mikrofon (124) aufweist;
Auswählen einer Interaktionszielperson für die Nachricht aus den erkannten Benutzern,
wobei das Auswählen einer Interaktionszielperson für die Nachricht aus den erkannten Benutzern aufweist:
Erkennen eines Benutzers aus den erkannten Benutzern, der eine Absicht zur Interaktion hat,
Auswählen des erkannten Benutzers als die Interaktionszielperson basierend auf einer Frage-und-Antwort-Historie eines jeden von den Benutzern;
Auswählen der Interaktionszielperson in beliebiger Weise, wenn die Benutzer oder der Benutzer, die die Absicht zum Antworten haben, nicht erkannt werden;
Erhalten von Interaktionsdaten von der ausgewählten Interaktionszielperson über die Eingabeeinheit (12, 13); und
Aktualisieren von Benutzerinformationen der Interaktionszielperson basierend auf den erhaltenen Interaktionsdaten.

13. Verfahren nach Anspruch 12, wobei das Auswählen der Interaktionszielperson aufweist:
Erkennen eines Benutzers, der eine Absicht zur Interaktion hat, aus den erkannten Benutzern basierend auf wenigstens einem von den Bilddaten oder den Stimmdaten, die über die Eingabeeinheit (12, 13) nach dem Ausgeben der Nachricht erhalten wurden; und
Auswählen des erkannten Benutzers als die Interaktionszielperson.

14. Verfahren nach Anspruch 13 oder 14, wobei das Erhalten der Interaktionsdaten aufweist:
Empfangen von Stimmdaten, die die Interaktionsdaten aufweisen, über das Mikrofon (124); und
Ausgeben einer Nachricht über die Ausgabeeinheit (14), um eine Beschränkung einer Äußerung oder eines Geräusches, das von anderen Benutzern erzeugt wurde, außer für die Interaktionszielperson einzuführen, wenn eine Stimme oder ein Klang aus den empfangenen Stimmdaten erfasst wird, die/der sich von der Stimme der Interaktionszielperson durch einen Referenzwert oder mehr unterscheidet.

## Revendications

1. Robot (1) comprenant :
une unité de communication (11) configurée pour établir une connexion avec un serveur (3) ;
une unité de sortie (14) comportant au moins un parmi un afficheur (142) ou une unité de sortie de son (144) ;
une mémoire (15) configurée pour stocker des informations utilisateur pour chaque utilisateur d'une pluralité d'utilisateurs, dans lequel les informations utilisateur comportent des informations d'identification d'un utilisateur correspondant ;
une unité d'entrée (12, 13) comportant au moins un parmi une caméra (132) ou un microphone (124) ; et
un dispositif de commande (16) configuré pour :
commander l'unité de sortie (14) pour délivrer en sortie un contenu ;
commander l'unité de sortie (14) pour délivrer en sortie un message lié au contenu durant ou après la sortie du contenu ;
reconnaître les utilisateurs sur la base des informations d'identification et de données d'image obtenues par le biais de la caméra (132) et/ou de données vocales obtenues par le biais du microphone (124) ;
reconnaître un utilisateur ayant une intention d'interagir parmi les utilisateurs reconnus ;
sélectionner l'utilisateur reconnu comme personne cible d'interaction sur la base d'un historique de questions-réponses de chacun des utilisateurs ;
sélectionner la personne cible d'interaction de façon arbitraire lorsque les utilisateurs ou l'utilisateur ayant l'intention de répondre ne sont pas reconnus ;
obtenir, via l'unité d'entrée (12, 13), des données d'interaction par rapport au message provenant de la personne cible d'interaction, lorsque la personne cible d'interaction est sélectionnée parmi la pluralité d'utilisateurs sur la base de données obtenues par le biais de l'unité d'entrée (12, 13) ; et
mettre à jour les informations utilisateur de la personne cible d'interaction sur la base des données d'interaction obtenues ou transmettre les données d'interaction obtenues au serveur (3).

2. Robot (1) selon la revendication 1, dans lequel les informations utilisateur comprennent des informations d'apprentissage de chacun des utilisateurs, et
dans lequel le dispositif de commande (16) est en outre configuré pour mettre à jour les informations d'apprentissage de la personne cible d'interaction sur la base des données d'interaction obtenues.

3. Robot (1) selon la revendication 1, dans lequel le dispositif de commande (16) est configuré pour reconnaître un utilisateur ayant une intention d'interagir parmi les utilisateurs reconnus pour sélectionner l'utilisateur reconnu comme personne cible d'interaction sur la base des données d'image obtenues par le biais de la caméra (132) et/ou des données vocales obtenues par le biais du microphone (124) après la sortie du message.

4. Robot (1) selon l'une quelconque des revendications 1 à 3, dans lequel le dispositif de commande (16) est configuré pour sélectionner un utilisateur ayant le plus faible niveau d'apprentissage, ou sélectionne un utilisateur ayant le plus petit nombre d'interactions comme personne cible d'interaction sur la base des informations d'apprentissage comprises dans les informations utilisateur de chacun des utilisateurs reconnus.

5. Robot (1) selon l'une quelconque des revendications 1 à 4, dans lequel le dispositif de commande (16) est configuré pour délivrer en sortie un message de demande d'interaction, qui comprend des informations uniques comprises dans les informations utilisateur de la personne cible d'interaction sélectionnée, par le biais de l'unité de sortie (14).

6. Robot (1) selon l'une quelconque des revendications 1 à 5, dans lequel le dispositif de commande (16) est configuré pour :
reconnaître les données d'interaction obtenues pour comparer un résultat de la reconnaissance à des données de réponse correcte pour le message ; et
commander l'unité de sortie (14) pour délivrer en sortie un message de réponse correcte lorsque le résultat de la reconnaissance des données d'interaction est correct à la suite de la comparaison.

7. Robot (1) selon l'une quelconque des revendications 1 à 6, dans lequel le dispositif de commande (16) est configuré pour :
recevoir des données vocales comprenant les données d'interaction par le biais du microphone (124) ; et
délivrer en sortie un message pour induire une restriction d'un énoncé ou d'un bruit généré par d'autres utilisateurs à l'exception de la personne cible d'interaction par le biais de l'unité de sortie (14) lorsqu'une voix ou un son autre qu'une voix de la personne cible d'interaction est détecté à partir des données vocales reçues d'une valeur de référence ou plus.

8. Robot (1) selon l'une quelconque des revendications 1 à 7, dans lequel le dispositif de commande (16) est configuré pour générer le message sur la base de métadonnées du contenu.

9. Robot (1) selon l'une quelconque des revendications 1 à 8, dans lequel le dispositif de commande (16) est configuré pour recevoir les informations utilisateur et/ou le contenu en provenance du serveur (3).

10. Robot (1) selon la revendication 1 ou 2, dans lequel le dispositif de commande (16) est configuré pour :
transmettre des données obtenues par le biais de l'unité d'entrée (12, 13) au serveur (3) après sortie du message ;
recevoir des informations de la personne cible d'interaction sélectionnée par le serveur (3) en provenance du serveur (3) ; et
délivrer en sortie un message de demande d'interaction comportant les informations reçues de la personne cible d'interaction par le biais de l'unité de sortie (14).

11. Robot (1) selon l'une quelconque des revendications 1 à 5 et 7 à 10, dans lequel le dispositif de commande (16) est configuré pour :
transmettre des données comportant les données d'interaction obtenues par le biais de l'unité d'entrée (12, 13) au serveur (3); et
recevoir un message depuis le serveur (3) selon que les données d'interaction sont correctes pour délivrer en sortie le message reçu par le biais de l'unité de sortie (14).

12. Procédé de commande d'un robot (1), le procédé comprenant :
la sortie d'un contenu par le biais d'une unité de sortie (14) comportant au moins un parmi un afficheur (142) ou une unité de sortie de son (144) ;
la sortie d'un message lié au contenu par le biais de l'unité de sortie (14) durant ou après la sortie du contenu ;
la reconnaissance d'une pluralité d'utilisateurs en utilisant une unité d'entrée (12) comportant au moins un parmi une caméra (132) ou un microphone (124) ;
la sélection d'une personne cible d'interaction pour le message parmi les utilisateurs reconnus,
dans lequel la sélection d'une personne cible d'interaction pour le message parmi les utilisateurs reconnus comporte :
la reconnaissance d'un utilisateur ayant une intention d'interagir parmi les utilisateurs reconnus ;
la sélection de l'utilisateur reconnu comme personne cible d'interaction sur la base d'un historique de questions-réponses de chacun des utilisateurs ;
la sélection arbitraire de la personne cible d'interaction lorsque les utilisateurs ou l'utilisateur ayant l'intention de répondre ne sont pas reconnus ;
l'obtention de données d'interaction à partir de la personne cible d'interaction sélectionnée par le biais de l'unité d'entrée (12, 13) ; et
la mise à jour d'informations utilisateur de la personne cible d'interaction sur la base des données d'interaction obtenues.

13. Procédé selon la revendication 12, dans lequel la sélection de la personne cible d'interaction comporte :
la reconnaissance d'un utilisateur ayant une intention d'interagir parmi les utilisateurs reconnus sur la base de données d'image et/ou de données vocales obtenues par le biais de l'unité d'entrée (12, 13) après sortie du message ; et
la sélection de l'utilisateur reconnu comme personne cible d'interaction.

14. Procédé selon la revendication 13 ou 14, dans lequel l'obtention des données d'interaction comporte :
la réception de données vocales comportant les données d'interaction par le biais du microphone (124) ; et
la sortie d'un message pour induire une restriction d'un énoncé ou d'un bruit généré par d'autres utilisateurs à l'exception de la personne cible d'interaction par le biais de l'unité de sortie (14) lorsqu'une voix ou un son autre qu'une voix de la personne cible d'interaction est détecté à partir des données vocales reçues d'une valeur de référence ou plus.
